# EUROPEAN PATENT APPLICATION

(11) **EP 4 668 395 A1**
(43) Date of publication of application: **24.12.2025**
(21) Application number: 25183015.4
(22) Date of filing: 16.06.2025
(51) Int. Cl.: H01M 10/0525, H01M 10/54

(54) **ELECTROLYTIC SOLUTION RECOVERY METHOD FOR ELECTRICITY STORAGE DEVICE**

(30) Priority: 21.06.2024 JP 2024100787
(71) Applicant: Prime Planet Energy & Solutions, Inc., Chuo-ku, Tokyo 103-0022 (JP)
(72) Inventor: UCHIDA, Yozo, Tokyo, 103-0022 (JP); KUROTAKI, Masayuki, Fukushima-ken, 963-0725 (JP)
(74) Representative: Kuhnen & Wacker Patent- und Rechtsanwaltsbüro PartG mbB

(57) **Abstract**

A recovery method for recovering an electrolytic solution 15 of a lithium-ion secondary battery 10 includes an installing step S2 and a hole forming step S3. In the installing step S2, the lithium-ion secondary battery 10 is installed in a chamber 110 such that a projecting pin 161 is located immediately under a hole forming portion 42a of a case 41. In the hole forming step S3, the table 140 is lowered to pierce into the hole forming portion 42a.

## Description

### BACKGROUND

The present disclosure relates to an electrolytic solution recovery method for an electricity storage device.

Japanese Laid-open Patent Publication No. 2013-4299 discloses a recycling method for separating a lithium-ion secondary battery in order to recover a valuable metal. In recycling of a lithium-ion secondary battery, it is necessary to remove an electrolytic solution that has been injected in the lithium-ion secondary battery.

In the method disclosed in Japanese Laid-open Patent Publication No. 2013-4299, after a through hole is formed in a sealing plate that hermetically seals a container of a lithium-ion secondary battery, the lithium-ion secondary battery is put in a vacuum dryer to evaporate the electrolytic solution. Thus, the electrolytic solution in the lithium-ion secondary battery can be removed.

Incidentally, the present inventor desires to more efficiently recover an electrolytic solution in recycling of an electricity storage device.

### SUMMARY

An electrolytic solution recovery method for an electricity storage device disclosed herein includes a step of preparing an electricity storage device in which an electrode body and an electrolytic solution are housed in a case, an installing step of installing the electricity storage device in a hermetically sealed chamber, and a step of reducing a pressure in the chamber and forming a hole in a lower portion of the case installed in the chamber in the installing step in an atmosphere with the reduced pressure.

According to the electrolytic solution recovery method, an electrolytic solution can be more efficiently recovered in recycling an electricity storage device.

### BRIEF DESCRIPTION OF THE DRAWINGS

FIG. 1 is a perspective view of a lithium-ion secondary battery 10.
FIG. 2 is a schematic longitudinal sectional view taken along the line II-II of FIG. 1.
FIG. 3 is a schematic view of an electrode body 20.
FIG. 4 is a longitudinal sectional view of the lithium-ion secondary battery 10.
FIG. 5 is a schematic view illustrating an electrolytic solution recovery device 100 according to a first preferred embodiment.
FIG. 6 is a flowchart illustrating procedures of recovering an electrolytic solution 15.
FIG. 7 is an enlarged view of a portion near a projecting pin 161 when the projecting pin 161 passes through a hole forming portion 42a.
FIG. 8 is a view illustrating an electrolytic solution recovery device 100B according to a second preferred embodiment.

### DETAILED DESCRIPTION OF THE PREFERRED EMBODIMENTS

Preferred embodiments disclosed herein will be described below. Unless not particularly limited, the preferred embodiments disclosed herein are not intended to be limiting the present disclosure as set forth in the claims. The accompanying drawings are schematic and do not necessarily reflect actual members or portions. Members/portions that have the same effect will be denoted by the same sign as appropriate, and the overlapping description will be omitted as appropriate.

The present disclosure relates to an electrolytic solution recovery method for an electricity storage device. In the electrolytic solution recovery method for an electricity storage device disclosed herein, as an electricity storage device, for example, a lithium-ion secondary battery is used. As for an electrode body of the lithium-ion secondary battery, for example, a positive electrode current collector is aluminum or an aluminum alloy and a negative electrode current collector is copper or a copper alloy.

### <First Preferred Embodiment>

### <Lithium-ion Secondary Battery 10>

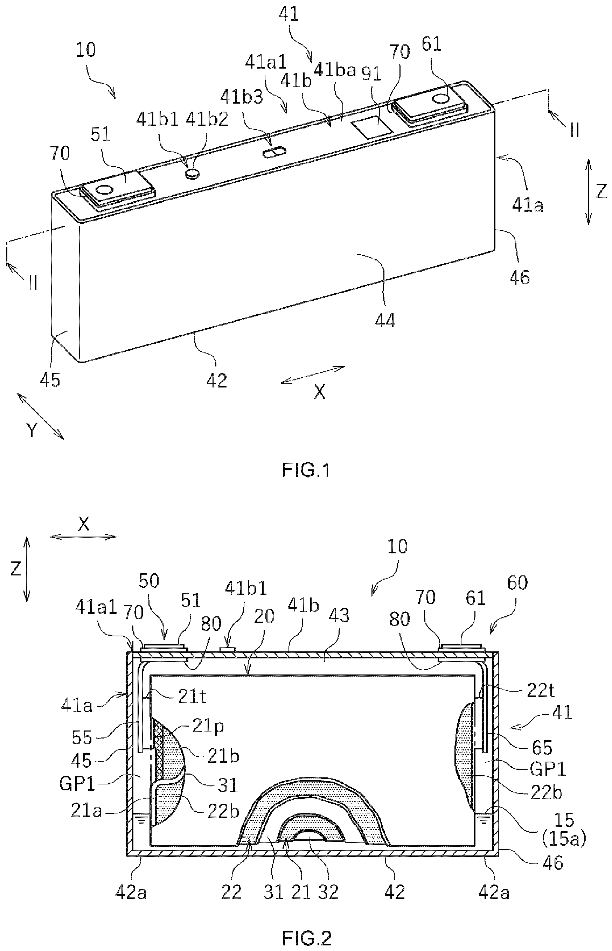

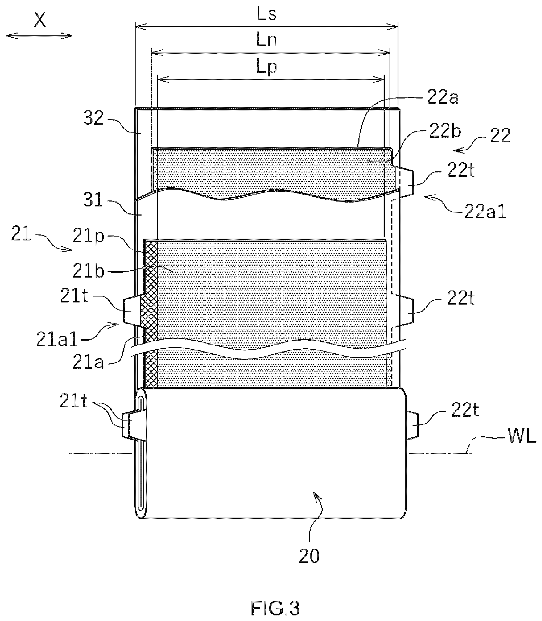

FIG. 1 is a perspective view of a lithium-ion secondary battery 10. FIG. 2 is a schematic longitudinal sectional view taken along the line II-II of FIG. 1. FIG. 3 is a schematic view of an electrode body 20. In FIG. 2, a state where inside of the lithium-ion secondary battery 10 is exposed along one broad width surface of an approximately rectangular parallelepiped case 41 is illustrated. In FIG. 2, the electrode body 20 is further illustrated in a partial cross-sectional view with the electrode body 20 partially broken. The lithium-ion secondary battery 10 illustrated in FIG. 2 is a so-called sealed battery in which the case 41 in which the electrode body 20 is housed is hermetically sealed. In this preferred embodiment, the case 41 is configured of a rectangular metal case having a rectangular parallelepiped shape. The reference sign X in the drawings indicates a long side direction of the case 41. The reference sign Y (see FIG. 1) indicates a short side direction that is orthogonal to the long side direction. The reference sign Z indicates a height direction that is orthogonal to the short side direction and the long side direction. A structure of the case 41 is not limited thereto. For example, the case 41 may be a so-called bag-shaped laminate case that covers the electrode body 20.

As illustrated in FIG. 2, the lithium-ion secondary battery 10 includes the electrode body 20 and the case 41. The case 41 includes a case body 41a having an opening 41a1, a sealing plate 41b that closes the opening 41a1 of the case body 41a, a positive electrode terminal 50, and a negative electrode terminal 60. The sealing plate 41b is an example of a lid body in the present disclosure. The electrode body 20 is housed in the case body 41a. Internal terminals 55 and 65 and external terminals 51 and 61 are attached to the sealing plate 41b via a gasket 70 and an insulator 80. In this preferred embodiment, the internal terminal 55 is connected to a positive electrode current collector 21 of the electrode body 20. The external terminal 51 is connected to the internal terminal 55 and forms the positive electrode terminal 50 outside the case 41. The internal terminal 65 is connected to a negative electrode current collector 22a of electrode body 20 (see FIG. 3). The external terminal 61 is connected to the internal terminal 65 and forms the negative electrode terminal 60 outside the case 41.

### <Electrode Body 20>

As illustrated in FIG. 3, in the electrode body 20, a positive electrode element 21 and a negative electrode element 22 are opposed to each other via a separator. The positive electrode element 21 includes the positive electrode current collector 21a and a positive electrode active material layer 21b formed on the positive electrode current collector 21a and containing a positive electrode active material. The negative electrode element 22 includes the negative electrode current collector 22a and a negative electrode active material layer 22b formed on the negative electrode current collector 22a and containing a negative electrode active material. Each of the positive electrode element 21 and the negative electrode element 22 may have a sheet-like shape. In this case, the positive electrode element may be, for example, a sheet-like member configured such that the positive electrode active material layer 21b is formed on both surfaces of the positive electrode current body formed of a metal foil with preset width and thickness. The negative electrode element may be a sheet-like member configured such that the negative electrode active material layer 22b is formed on both surfaces of the negative electrode current collector 22a formed of a metal foil with preset width and thickness. The sheet-like positive electrode element 21 will be referred to as a positive electrode sheet. The sheet-like negative electrode element 22 will be referred to as a negative electrode sheet.

For example, the electrode body 20 can be a so-called wound electrode body. The electrode body 20 includes a positive electrode sheet 21 as the positive electrode element, a negative electrode sheet 22 as the negative electrode element, and separator sheets 31 and 32 as separators. Each of the positive electrode sheet 21, a first separator sheet 31, the negative electrode sheet 22, and a second separator sheet 32 is a long band-like member, and the positive electrode sheet 21, the first separator sheet 31, the negative electrode sheet 22, and the second separator sheet 32 are stacked and wound such that length directions and width directions thereof match. The electrode body 20 is housed in the case 41 in a state of being covered with an insulating film (not illustrated) or the like.

### <Positive Electrode Sheet 21>

The positive electrode sheet 21 is configured such that the positive electrode active material layer 21b containing the positive electrode active material is formed on each of both surfaces of the positive electrode current collector 21a having preset width and thickness excluding an unformed portion 21a1 set to have a uniform width in one end portion in a width direction. Multiple positive electrode tabs 21t are intermittently provided in preset positions along a longitudinal direction of the positive electrode sheet 21 in the unformed portion 21a1. Each of the multiple positive electrode tabs 21t protrudes in a width direction of the positive electrode sheet 21. In this preferred embodiment, the positions in which the multiple positive electrode tabs 21t are provided are set such that positions of the multiple positive electrode tabs 21t match in a wound state.

A material having desired resistance, such as electrolyte resistance, oxidation resistance, or the like, can be used for the positive electrode current collector 21a in consideration of an operating potential in a positive electrode. In the lithium-ion secondary battery, in general, for example, aluminum or an aluminum alloy containing aluminum as a main material is used for the positive electrode current collector 21a. Aluminum or aluminum foil containing aluminum as a main material can be used for the positive electrode current collector 21a in the sheet-like positive electrode element 21. A material that can release charge carriers during charging and can absorb charge carriers during discharging can be used for the positive electrode active material contained in the positive electrode active material layer 21b.

For example, in the lithium-ion secondary battery 10, the positive electrode active material layer 21b releases lithium ions during charging and absorbs lithium ions during discharging. Examples of the positive electrode active material include, for example, a lithium-transition metal complex material. Various other materials than the lithium-transition metal complex material have been proposed as the positive electrode active material and, unless specifically stated otherwise, the positive electrode active material is not limited to the lithium-transition metal complex material. The positive electrode active material layer 21b may be formed by applying an electrode mixture slurry and drying the applied electrode mixture slurry. In this preferred embodiment, a positive electrode protective layer 21p is provided on the positive electrode current collector 21a (the unformed portion 21a1) at an edge of the positive electrode active material layer 21b. The positive electrode protective layer 21p can is a layer that protects the unformed portion 21a1 and can be a layer containing an inorganic filler (for example, alumina).

### <Negative Electrode Sheet 22>

The negative electrode sheet 22 is configured such that the negative electrode active material layer 22b containing the negative electrode active material is formed on each of both surfaces on the negative electrode current collector 22a having preset width and thickness excluding an unformed portion 22a1 set to have a uniform width in one end portion in a width direction. In this preferred embodiment, multiple negative electrode tabs 22t are intermittently provided in preset positions along a longitudinal direction of the negative electrode sheet 22 in the unformed portion 22a1. Each of the multiple negative electrode tabs 22t protrudes in a width direction of the negative electrode sheet 22. In this preferred embodiment, the positions in which the multiple negative electrode tabs 22t are provided are set such that positions of the multiple negative electrode tabs 22t match in a wound state.

A material having desired resistance, such as electrolyte resistance, oxidation resistance, or the like, can be used for the negative electrode current collector 22a in consideration of an operating potential in a negative electrode. In the lithium-ion secondary battery 10, in general, for example, copper or a copper alloy containing copper as a main material is used for the negative electrode current collector 22a. Copper or copper foil containing copper as a main material can be used for the negative electrode current collector 22a in the sheet-like negative electrode element 22. A material that can store charge carriers during charging and can release charge carriers during discharging can be used for the negative electrode active material contained in the negative electrode active material layer 22b. For example, in the lithium-ion secondary battery, like natural graphite, a material that can store lithium ions during charging and can release lithium ions that have been stored during charging during discharging. In general, various other materials than natural graphite have been proposed as the negative electrode active material, and there is no particular limitation on the negative electrode active material. The negative electrode active material layer 22b can be formed by, for example, applying a mixture of the negative electrode active material described above and a conductive material, a binder, or the like in a solvent and drying the applied mixture.

A porous resin sheet through which an electrolyte having desired heat resistance can pass is used for the separator sheets 31 and 32, for example. As for the separator sheets 31 and 32, various proposals have been made as well, and there is no particular limitation thereon. Each of the separator sheets 31 and 32 may include a function layer, such as an adhesive layer, a heat resistance layer (HRL), or the like, on a surface of a base substrate formed of a resin porous sheet. The heat resistance layer may be, for example, a layer including an inorganic filler, such as alumina, silica, boehmite, magnesia, titania, or the like, and a binder, such as PVdF or the like. The heat resistance layer may also serve as an adhesive layer.

Herein, as illustrated in FIG. 3, a width Ln of the negative electrode active material layer 22b is, for example, formed to be larger than a width Lp of the positive electrode active material layer 21b. A width Ls of the separator sheets 31 and 32 is larger than that of the negative electrode active material layer 22b. That is, as illustrated in FIG. 3, Lp < Ln < Ls is satisfied. The positive electrode sheet 21, the first separator sheet 31, the negative electrode sheet 22, and the second separator sheet 32 are oriented in the length direction, are stacked in order, and are wound. Herein, the negative electrode active material layer 22b covers the positive electrode active material layer 21b with the separator sheets 31 and 32 interposed therebetween. The negative electrode active material layer 22b is covered with the separator sheets 31 and 32. The positive electrode tabs 21t of the positive electrode current collector 21a and the negative electrode tabs 22t of the negative electrode current collector 22a are provided to protrude from the separator sheets 31 and 32 such that the positive electrode tabs 21t and the negative electrode tabs 22t extend toward opposite sides from each other in the width direction. The positive electrode protective layer 21p is opposed to an edge of the negative electrode sheet 22 in an opposite side to a side in which the negative electrode tabs 22t are provided via the separator sheets 31 and 32.

As illustrated in FIG. 2, the electrode body 20 is in a flat state along one plane including a winding axis WL (see FIG. 3) so as to be housed in the case body 41a of the case 41. The positive electrode tabs 21t are arranged at one side and the negative electrode tabs 22t are arranged at the other side along the winding axis WL of the electrode body 20. Note that, herein, as the electrode body 20, a wound electrode body obtained by stacking the positive electrode sheet 21, the first separator sheet 31, the negative electrode sheet 22, and the second separator sheet 32 and winding an obtained stacked body is illustrated as example. A configuration of the electrode body 20 is not limited to the wound electrode body described above. Although not illustrated, the electrode body 20 may be, for example, a so-called stacked electrode body obtained by stacking a positive electrode sheet and a negative electrode sheet each having a preset shape with a separator sheet interposed therebetween.

### <Case 41>

As illustrated in FIG. 2, the case 41 houses the electrode body 20 and the electrolytic solution 15. The case body 41a of the case 41 is a bottomed member having the opening 41a1 at one side surface that is opposed to a bottom surface and, in this preferred embodiment, has an approximately rectangular parallelepiped shape with one side surface opened. The sealing plate 41b is a plate material that is attached to the opening 41a1 of the case body 41a. In this preferred embodiment, from a viewpoint of reducing weight and ensuring required rigidity, each of the case body 41a and the sealing plate 41b is formed of aluminum or an aluminum alloy containing aluminum as a main material. Note that multiple electrode bodies 20 may be housed in the case 41.

The electrolytic solution 15 is housed in the case 41 with the electrode body 20. A portion of the electrolytic solution 15 is permeated in the electrode body 20. The electrolytic solution 15 is, for example, a nonaqueous electrolytic solution including a nonaqueous solvent (an organic solvent) and a supporting salt (an electrolyte salt, for example, a lithium salt and a sodium salt). Examples of the nonaqueous solvent include carbonates, such as ethylene carbonate, dimethyl carbonate, ethyl methyl carbonate, or the like. Examples of the supporting salt include fluorine-containing lithium salt, such as lithium hexafluorophosphate (LiPF₆) or the like. The electrolytic solution 15 is typically in a liquid state, but may be in a gel state. There is an excessive electrolytic solution 15a of the electrolytic solution 15 that cannot be permeated in the electrode body 20 and is thus accumulated between the case 14 and the electrode body 20 in the case 41. In this preferred embodiment, the excessive electrolytic solution 15a is accumulated at each of both ends (gaps GP1 that will be described later) of the electrode body 20 in the long side direction X. Note that, in the following description, unless specifically stated otherwise, the term "electrolytic solution 15" includes "the excessive electrolytic solution 15a."

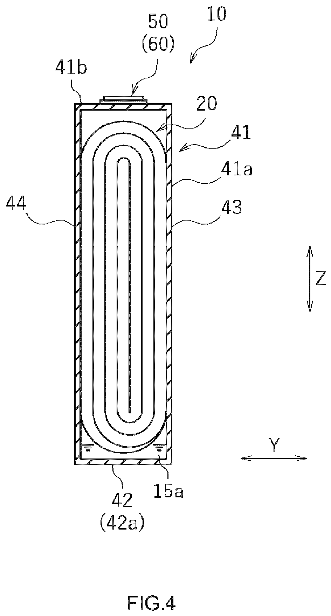

FIG. 4 is a longitudinal sectional view of the lithium-ion secondary battery 10. As illustrated in FIG. 4, the electrode body 20 contacts the case 41 in the short side direction Y. A lower end of the electrode body 20 is arranged in a position relatively near a lower end of the case 41 in the height direction Z. Therefore, of the electrolytic solution 15 illustrated in FIG. 2, a portion located further at right than the electrode body 20 is relatively less likely to move leftward than the electrode body 20. Similarly, of the excessive electrolytic solution 15a, a portion located further at left than the electrode body 20 is relatively less likely to move rightward than the electrode body 20.

### <Case Body 41a>

As illustrated in FIG. 2, the case body 41a includes a bottom surface portion 42 that forms an approximately rectangular bottom surface, a pair of broad width surface portions 43 and 44 (see FIG. 1), and a pair of narrow width surface portions 45 and 46. The bottom surface portion 42 is located below the electrode body 20 in the case 41 in a front view of the lithium-ion secondary battery 10 illustrated in FIG. 2. In this preferred embodiment, the bottom surface portion 42 is a surface that is opposed to the sealing plate 41b to which the positive electrode terminal 50 and the negative electrode terminal 60 are attached. The bottom surface portion 42 is arranged in a position that is opposed to a safety valve 41b3 that will be described later.

The pair of broad width surface portions 43 and 44 are one example of a pair of broad width side surfaces in the present disclosure. The narrow width surface portions 45 and 46 are one example of a pair of narrow width side surfaces in the present disclosure. Each of the broad width surface portions 43 and 44 rises from a corresponding one of long sides of the bottom surface portion 42. Each of the pair of narrow width surface portions 45 and 46 rises from a corresponding one of short sides of the bottom surface portion 42. The opening 41a1 surrounded by the pair of broad width surface portions 43 and 44 and the pair of narrow width surface portions 45 and 46 is formed in one side surface of the case body 41a.

As illustrated in FIG. 2, the case body 41a of the case 41 includes the gap GP1 between the electrode body 20 and each of the pair of narrow width surface portions 45 and 46. In this preferred embodiment, the gap GP1 is formed at each of the both ends of the electrode body 20 in the long side direction X. The gap GP1 is a relatively wide gap between the case 41 and the electrode body 20. As illustrated in FIG. 4, each of the pair of broad width surface portions 43 and 44 abuts on the electrode body 20. In this preferred embodiment, the electrode body 20 and each of the pair of broad width surface portions 43 and 44 abut on each other in the short side direction Y. Note that there may be some other component between the electrode body 20 and each of the pair of broad width surface portions 43 and 44. For example, there may be an insulting film that covers the electrode body 20 between the electrode body 20 and each of the pair of broad width surface portions 43 and 44. As illustrated in FIG. 2, in this preferred embodiment, a portion of the bottom surface portion 42 that is located under the gap GP1 is a hole forming portion 42a. Although details will be described later, the hole forming portion 42a is a portion in which a hole is formed in order to recover the electrolytic solution 15. In this preferred embodiment, the hole forming portion 42a is provided at each of the both ends of the electrode body 20. A method for recovering the electrolytic solution 15 will be described later.

### <Sealing plate 41b>

The sealing plate 41b is a lid body that is attached to the opening 41a1 of the case body 41a that houses the electrode body 20. In this preferred embodiment, as illustrated in FIG. 1, the sealing plate 41b has a rectangular shape in a plan view. An outside surface 41ba forms an upper surface of the sealing plate 41b. In this preferred embodiment, a liquid injection hole 41b1 and the safety valve 41b3 are provided in the outside surface 41ba. After the sealing plate 41b is attached to the opening 41a1 of the case body 41a and the electrolytic solution 15 is injected in the case body 41a, a sealing member 41b2 is attached to the liquid injection hole 41b1 to close the liquid injection hole 41b1. Note that, in FIG. 2, a state where the sealing plate 41b is assembled to the opening 41a1 of the case body 41a and is thus welded is illustrated. In FIG. 2, the sealing member 41b2 is not attached to the sealing plate 41b. The safety valve 41b3 is a thin portion that breaks when a pressure in the case 41 exceeds a preset pressure. In this preferred embodiment, it is designed that, when the pressure in the case 41 is 1.4 MPa or more, the safety valve 41b3 breaks. However, the pressure at which the safety valve 41b3 breaks is not limited thereto. Note that the sealing plate 41b forms an upper surface of the lithium-ion secondary battery 10, but is not limited thereto. For example, a pair of openings 41a1 and a pair of sealing plates 41b may be provided in the long side direction.

As illustrated in FIG. 2, the positive electrode terminal 50 and the negative electrode terminal 60 that are connected to the electrode body 20 are attached to the sealing plate 41b. The positive electrode terminal 50 and the negative electrode terminal 60 are examples of a current collecting terminal portion. The positive electrode terminal 50 includes the external terminal 51 and the internal terminal 55. The negative electrode terminal 60 includes the external terminal 61 and the internal terminal 65. Each of the internal terminals 55 and 65 is attached to an inner side of the sealing plate 41b via the insulator 80. Each of the external terminals 51 and 61 is attached to an outer side of the sealing plate 41b via the gasket 70. Each of the internal terminals 55 and 65 extends inside the case body 41a. Each of the unformed portion 21a1 of the positive electrode current collector 21a and the unformed portion 22a1 of the negative electrode current collector 22a of the electrode body 20 is attached to a corresponding one of the internal terminals 55 and 65 attached to both side portions of the sealing plate 41b in the long side direction.

Each of the internal terminals 55 and 56 is formed of metal. For example, aluminum, an aluminum alloy, or the like can be used as the positive electrode internal terminal 55, from a viewpoint of increasing joining strength with the positive electrode tabs 21t. For example, copper, a copper alloy, or the like can be used as the negative electrode internal terminal 65, from a viewpoint of increasing joining strength with the negative electrode tabs 22t, and also, from a viewpoint that copper, a copper alloy, or the like has desired resistance, such as electrolyte resistance, oxidation resistance, or the like.

Each of the external terminals 51 and 61 is formed of metal. A metal used as each of the external terminals 51 and 61 is selected as appropriate in accordance with a type of an external coupling component, such as a bus bar or the like. As the external terminals 51 and 61, for example, aluminum, an aluminum alloy, copper, a copper alloy, or the like can be used. Each of the external terminals 51 and 61 may be configured, for example, by joining multiple metals by dissimilar metal joining. Although not illustrated, an attachment hole is formed in the sealing plate 41b. At the attachment hole, the insulator 80 is attached to the inner side of the sealing plate 41b, and the gasket 70 is attached to the outer side of the sealing plate 41b. An axis portion is provided at one of the internal terminals 55 and 65 and the external terminals 51 and 61 and is inserted through the attachment hole with the gasket 70 and the insulator 80 interposed therebetween. The internal terminals 55 and 65 and the external terminals 51 and 61 are joined via the axis portion inserted through the attachment hole.

A material having excellent chemical resistance and weather resistance may be used for each of the gasket 70 and the insulator 80. In this preferred embodiment, a tetrafluoroethylene-perfluoroalkylvinylether copolymer (PFA) is used for the gasket 70. Note that a material used for the gasket 70 is not limited to PFA. For example, polypropylene (PP), polyethylene (PE), polyphenylene sulfide resin (PPS), or the like may be used for the gasket 70. Polyphenylene sulfide resin (PPS) is used for the insulator 80. Note that a material used for the insulator 80 is not limited to PPS.

In manufacturing the lithium-ion secondary battery 10, the positive electrode terminal 50 and the negative electrode terminal 60 are attached thereto in a state where the gasket 70 and the insulator 80 are attached to the sealing plate 41b. Next, the positive electrode tabs 21t are joined to the internal terminal 55 of the positive electrode terminal 50, the negative electrode tabs 22t are joined to the internal terminal 65 of the negative electrode terminal 60, and thus, the electrode body 20 is attached to the sealing plate 41b. Subsequently, the sealing plate 41b is mounted to the opening 41a1 of the case body 41a (see FIG. 1) while the electrode body 20 is inserted in the case body 41a from the opening 41a1. At this time, the winding axis WL of the electrode body 20 (see FIG. 3) is arranged along the long side direction X of the case body 41a. The positive electrode tabs 21t of the electrode body 20 are oriented toward the narrow width surface portions 45. The negative electrode tabs 22t are oriented toward the narrow width surface portions 46. As illustrated in FIG. 2, a peripheral portion of the sealing plate 41b is joined to an edge of the opening 41a1 of the case body 41a. This joining may be, for example, continuous welding without a gap. The joining can be realized, for example, by laser welding.

Various structures can be employed for the internal terminals 55 and 65, the external terminals 51 and 61, the gasket 70, and the insulator 80. For example, a proper structure may be employed for each of the internal terminals 55 and 65, the external terminals 51 and 61, the gasket 70, and the insulator 80 in accordance with a structure of the electrode body 20 that is housed. A mechanism (current interrupt device (CID)) that interrupts a current as an internal pressure is increased by generating a gas inside at a time of overcharge may be provided in one of the positive electrode terminal 50 and the negative electrode terminal 60.

Incidentally, the present inventor desires to efficiently recover the electrolytic solution 15 when the electricity storage device in which the electrode body 20 and the electrolytic solution 15 are housed in the case 41 as in the lithium-ion secondary battery 10 described above is disposed. A method for efficiently recovering the electrolytic solution 15 from the lithium-ion secondary battery 10 has not been established yet.

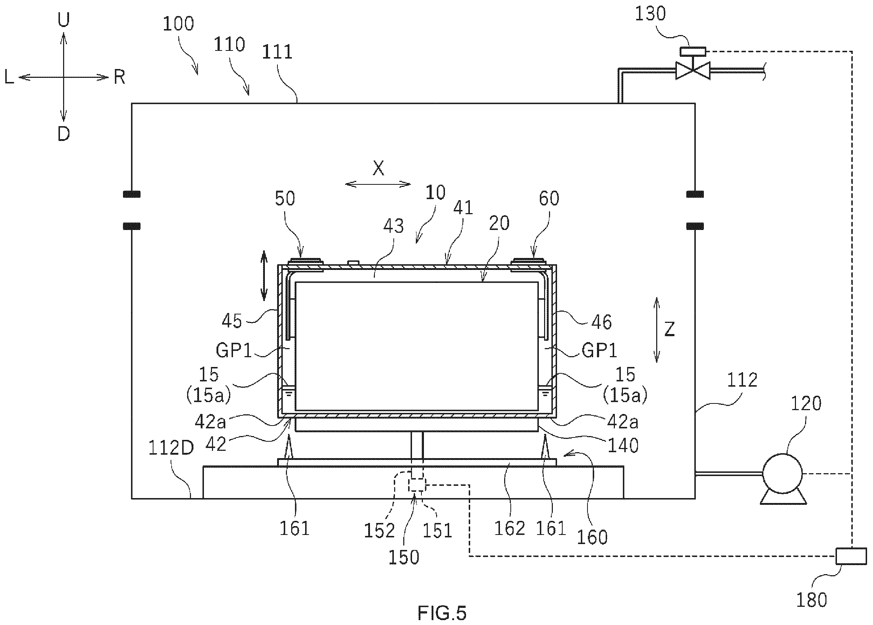

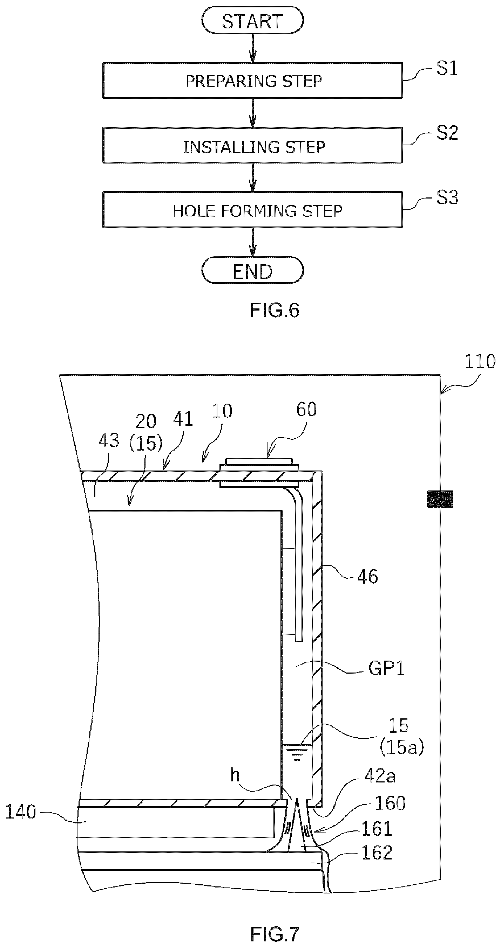

FIG. 5 is a schematic view illustrating an electrolytic solution recovery device 100. FIG. 6 is a flowchart illustrating procedures of recovering an electrolytic solution 15.

As illustrated in FIG. 6, an electrolytic solution recovery method for an electricity storage device proposed herein includes an installing step S2 and a hole forming step S3. The installing step S2 is a step of installing the electricity storage device in a hermetically sealed chamber 110 (see FIG. 5). In the installing step S2 described above, the lithium-ion secondary battery 10 as the electricity storage device is installed in a predetermined position in a preset attitude. In the hole forming step S3, a pressure in the chamber 110 is reduced and a hole is formed in a lower portion (in the example illustrated in FIG. 5, the bottom surface portion 42) of the case 41 installed in the chamber 110 in the installing step S2 in an atmosphere with the reduced pressure.

Herein, the lower portion of the case 41 is defined in the attitude of the electricity storage device when the hole is formed in the hole forming step S3. Herein, the lower portion of the case 41 is a portion of the case 41 of the electricity storage device that is caused to face down in forming the hole in the hole forming step S3.

According to the electrolytic solution recovery method, the pressure in the chamber 110 is reduced, and the hole is formed in the lower portion (the bottom surface portion 42) of the case 41 installed in the chamber 110 in the installing step S2 in the atmosphere with the reduced pressure. Therefore, when the hole is formed in the lower portion (the bottom surface portion 42) of the case 41, the pressure in the case 41 is higher than a pressure outside the case 41. Furthermore, when the hole is formed in the lower portion of the case 41, the excessive electrolytic solution 15a is accumulated around the hole. Therefore, due to a pressure difference between the pressure in the case 41 and the pressure outside the case 41, the excessive electrolytic solution 15a accumulated in the lower portion of the case 41 can be efficiently drained to outside (the inside of the chamber 110). At this time, when the electrolytic solution 15 (excluding the excessive electrolytic solution 15a) is permeated in the electrode body 20, a gas accumulated in a space partitioned by the electrolytic solution 15 in the electrode body 20 is kept at a high pressure in some cases. After the excessive electrolytic solution 15a accumulated in the lower portion of the case 41 is drained, the inside of the case 41 is in a state where the pressure therein is reduced to about a same level as that in the chamber 110. The electrolytic solution 15 permeated in the electrode body 20 is pushed out of the electrode body 20 by the gas accumulated in the space partitioned by the electrolytic solution 15 in the electrode body 20 and is drained to the case 41. The electrolytic solution 15 drained to the case 41 is drained from the hold formed in the lower portion of the case 41. As described above, according to the electrolytic solution recovery method proposed herein, the electrolytic solution 15 permeated in the electrode body 20 can be also efficiently recovered.

A device that embodies the above-described electrolytic solution recovery method and the electrolytic solution recovery method will be described in more detail below.

FIG. 5 is a schematic view illustrating the electrolytic solution recovery device 100 according to a first preferred embodiment. Herein, in FIG. 5, up, down, left and right are denoted by the reference signs U, D, L, and R, respectively. However, up, down, left and right are merely directions used for convenience of description, and do not limit an installation form of the electrolytic solution recovery device 100 or the like. Although not illustrated, a direction that is orthogonal to an up-down direction of the electrolytic solution recovery device 100 (which will be hereinafter simply referred to as an "up-down direction") and a left-right direction of the electrolytic solution recovery device 100 (which will be hereinafter simply referred to as a "left-right direction" is a front-rear direction of the electrolytic solution recovery device 100 (which will be hereinafter simply referred to as a "front-rear direction." As illustrated in FIG. 5, the electrolytic solution recovery device 100 includes the chamber 110, a vacuum pump 120, an opening valve 130, and a control device 180. The chamber 110 includes a table 140, a lifting device 150, and a hole forming device 160. The electrolytic solution recovery device 100 is a device in which he lithium-ion secondary battery 10 is installed and that recovers the electrolytic solution 15.

The chamber 110 includes a chamber lid body 111 and a chamber body 112. Each of the chamber lid body 111 and the chamber body 112 is configured to be opened and closed. The chamber 110 is configured such that, when the chamber lid body 111 and the chamber body 112 are closed, airtightness of the chamber 110 is ensured. Note that the chamber 110 may include, for example, a channel that can be opened and closed in a bottom surface portion 112D of the chamber body 112. The chamber 110 may be configured such that a liquid or the like in the chamber 110 can be recovered.

The table 140 is a table on which the lithium-ion secondary battery 10 is placed. The table 140 has a plate-like shape that extends in the left-right direction and the front-rear direction. Although not illustrated, the table 140 is configured such that the lithium-ion secondary battery 10 is fixed thereto. There is no particular limitation on a method for fixing the lithium-ion secondary battery 10 and, for example, the lithium-ion secondary battery 10 may be fixed by a vice provided so as to be opened and closed in the front-rear direction and the left-right direction. Note that a length of the table 140 of this preferred embodiment in the left-right direction is smaller than a length of the lithium-ion secondary battery 10 in the long side direction X.

The lifting device 150 is a device that lifts and lowers the table 140. In this preferred embodiment, the lifting device 150 includes a servo motor 151 and a ball screw 152. One end of the ball screw 152 is connected to a lower end of the table 140 and the other end of the ball screw 152 is connected to the servo motor 151. The servo motor 151 is electrically couple to the control device 180 and is controlled by the control device 180. When the servo motor 151 is driven by the control device 180, a projection length of the ball screw 152 varies. When the projection length of the ball screw 152 varies, a position of the table 140 connected to the ball screw 152 in the up-down direction varies. In this preferred embodiment, a lower end of the ball screw 152 is located below an installation plate 162 that will be described later. Note that there is no particular limitation on the number of servo motors 151 and the number of ball screws 152.

The hole forming device 160 is arranged under the table 140. The hole forming device 160 includes a projecting pin 161 and the installation plate 162. In this preferred embodiment, the projecting pin 161 is arranged immediately under the hole forming portion 42a. That is, two projecting pin 161 are arranged to be aligned along the long side direction X of the lithium-ion secondary battery 10. The projecting pin 161 is one example of a hole forming tool in the present disclosure. The projecting pin 161 has a sharp-pointed shape toward top. Accordingly, the projecting pin 161 is configured to pierce into the case 41. In this preferred embodiment, the projecting pin 161 is formed of resin. Therefore, even when the projecting pin 161 pierces into the case body 41a, short circuit does not occur in the electrode body 20 of the lithium-ion secondary battery 10. However, a material forming the projecting pin 161 is not limited thereto.

The installation plate 162 is a plate on which the projecting pin 161 is installed. The installation plate 162 is configured such that a hole (not illustrated) that is larger than an outer diameter of the ball screw 152 is formed and the ball screw 152 is inserted in the hole in a plan view. Therefore, even when the projecting length of the ball screw 152 varies, the installation plate 162 does not move. Although there is no particular limitation on a shape of the installation plate 162, the installation plate 162 extends in the left-right direction and the front-rear direction, for example. That is, the installation plate 162 has an approximately rectangular shape in a plan view. There is no particular limitation on a material that forms the installation plate 162.

The vacuum pump 120 is connected to the chamber 110. The vacuum pump 120 is configured to reduce the pressure in the chamber 110. Note that, although not illustrated, for example, a valve or the like may be provided between the chamber 110 and the vacuum pump 120. The vacuum pump 120 is electrically connected to the control device 180 and is controlled by the control device 180.

Since the chamber 110 is configured to ensure airtightness, when the vacuum pump 120 is driven, the inside of the chamber 110 is put in a depressurized state. As used herein, the term "depressurized state" means a state where a pressure is lower than an atmosphere pressure, and includes a vacuum state. In this preferred embodiment, the vacuum pump 120 is driven, and thus, the inside of the chamber 110 is put in a vacuum state. Note that, as described above, the case 41 of the lithium-ion secondary battery 10 is hermetically sealed. Accordingly, even when the pressure in the chamber 110 is reduced by the vacuum pump 120, the pressure in the case 41 is not reduced. Therefore, in the following description, unless specifically stated otherwise, the term "the inside of the chamber 110" does not include a space in the case 41.

The opening valve 130 is connected to the chamber 110. In this preferred embodiment, the opening valve 130 is connected to the chamber lid body 111. However, the opening valve 130 may be connected to the chamber body 112. The opening valve 130 is a valve configured to be opened and closed. When the opening valve 130 is opened, the inside of the chamber 110 and the outside of the chamber 110 are connected. Therefore, the inside of the chamber 110 is opened to air. The opening valve 130 is electrically connected to the control device 180 and opening and closing thereof is controlled by the control device 180.

The control device 180 controls the vacuum pump 120, the opening valve 130, and the servo motor 151. There is no particular limitation on a configuration of the control device 180. The control device 180 is, for example, a microcomputer. Although there is no particular limitation on a configuration of a hardware of the microcomputer, for example, the microcomputer includes an interface (I/F), a central processing unit (CPU), a read only memory (ROM), a random access memory (RAM), and a storage device.

The electrolytic solution recovery device 100 according to this preferred embodiment has been described above. Next, steps performed when the electrolytic solution 15 of the lithium-ion secondary battery 10 is recovered by the electrolytic solution recovery device 100 will be described. FIG. 6 is a flowchart illustrating procedures of recovering the electrolytic solution 15.

The preparing step S1 is a step of preparing the lithium-ion secondary battery 10 (electricity storage device) in which the electrode body 20 and the electrolytic solution 15 are housed in the case 41. In the preparing step S1, for example, the used lithium-ion secondary battery 10 is prepared. Note that, in the lithium-ion secondary battery 10, the case 41 is hermetically sealed as described above. At this time, the pressure in the case 41 is equal to an atmospheric pressure.

The installing step S2 is a step of installing the lithium-ion secondary battery 10 (electricity storage device) in the hermetically sealed chamber 110. In the installing step S2, a worker opens the chamber lid body 111 of the chamber 110 and installs the lithium-ion secondary battery 10 on the table 140. In this preferred embodiment, the lithium-ion secondary battery 10 is arranged in a direction in which the left-right direction of the electrolytic solution recovery device 100 and the long side direction X of the lithium-ion secondary battery 10 match and the up-down direction of the electrolytic solution recovery device 100 and the height direction Z of the lithium-ion secondary battery 10 match. At this time, the pair of broad width surface portions 43 and 44 and the pair of narrow width surface portions 45 and 46 of the lithium-ion secondary battery 10 are installed so as to be approximately perpendicular to the table 140. Therefore, in the installing step S2, the worker installs the lithium-ion secondary battery 10 such that the pair of broad width surface portions 43 and 44 and the pair of narrow width surface portions 45 and 46 are approximately perpendicular to an installation surface of the electrolytic solution recovery device 100. That is, the worker arranges the lithium-ion secondary battery 10 in the chamber 110 such that the sealing plate 41b is arranged on the upper surface in the height direction Z. A position of the lithium-ion secondary battery 10 in the long side direction X is determined such that the projecting pin 161 is arranged immediately under the hole forming portion 42a. When the lithium-ion secondary battery 10 is installed, then, the chamber lid body 111 is attached to the chamber body 112. Thus, the lithium-ion secondary battery 10 is installed in the chamber 110 and the chamber 110 is hermetically sealed.

The hole forming step S3 is a step of reducing the pressure in the chamber 110 and forming a hole in the hole forming portion 42a of the case 41 installed in the chamber 110 in the installing step S2 in the atmosphere with the reduced pressure. In the hole forming step S3, a portion in which the hole is formed is set in a portion of the lower portion of the case 41 in which a gap between the case 41 and the electrode body 20 is wide. In this preferred embodiment, the hole is opened in a position under each of the gaps GP1 (see FIG. 5) each of which is formed between the electrode body 20 and a corresponding one of the pair of narrow width surface portions 45 and 46. In the hole forming step S3 of this preferred embodiment, the projecting pin 161 is pressed to the hole forming portion 42a of the case 41. In the hole forming step S3, first, the opening valve 130 is closed by the control device 180. In this state, the vacuum pump 120 is driven by the control device 180. Thus, the pressure in the chamber 110 is reduced. In this preferred embodiment, the pressure in the chamber 110 s reduced by the vacuum pump 120 until the inside of the chamber 110 becomes vacuum. Note that the case 41 of the lithium-ion secondary battery 10 is hermetically sealed, and therefore, even when the inside of the chamber 110 is caused to be vacuum, the pressure in the case 41 is maintained to be equal to the atmospheric pressure.

After the inside of the chamber 110 is caused to be vacuum, the servo motor 151 is driven by the control device 180. The control device 180 drives the servo motor 151 in a direction in which the projecting length of the ball screw 152 is reduced from a state illustrated in FIG. 5. That is, the table 140 is moved downward by the control device 180. In installing step S2, the projecting pin 161 is arranged immediately under the hole forming portion 42a, and therefore, when the table 140 is moved downward, the projecting pin 161 contacts the hole forming portion 42a. When the table 140 is further moved downward, the projecting pin 161 passes through the hole forming portion 42a.

FIG. 7 is an enlarged view of a portion near the projecting pin 161 when the projecting pin 161 passes through the hole forming portion 42a. As illustrated in FIG. 7, a through hole h that passes through in the up-down direction is formed in the hole forming portion 42a. At this time, the excessive electrolytic solution 15a flows out from the through hole h. Since the through hole h is formed, the space in the case 41 and the space in the chamber 110 are connected. As described above, the pressure in the case 41 is equal to the atmospheric pressure and the inside of the chamber 110 is in a vacuum state. Therefore, a pressure difference between the pressure in the case 41 and the pressure in the chamber 110 is generated. Since the pressure in the case 41 is higher than the pressure in the chamber 110, the electrolytic solution 15 permeated in the electrode body 20 in the case 41 flows out to the caps GP1, passes through the through hole h, and flows out of the case 41. When there is no longer the pressure difference between the inside of the case 41 and the inside of the chamber 110, flowing out of the electrolytic solution 15 permeated in the electrode body 20 stops. The electrolytic solution 15 that has flown out is accumulated in the bottom surface portion 112D of the chamber body 112 (see FIG. 5).

After the hole forming step S3, the opening valve 130 is opened. Thus, each of the pressures in the chamber 110 and the case 41 is caused to be equal to the atmospheric pressure. The channel that can be opened and closed and is provided in the chamber 110 is opened, and thus, the electrolytic solution 15 accumulated in the bottom surface portion 112D can be recovered. Note that, after the electrolytic solution 15 is recovered, the lithium-ion secondary battery 10 is removed from the chamber 110, and the lithium-ion secondary battery 10 is recycled as appropriate. Note that, in a series of steps of FIG. 6, each of the pressures in the chamber 110 and the case 41 is equal to or lower than the atmospheric pressure. As described above, the safety valve 41b3 (see FIG. 1) breaks when the pressure in the case body 41a is 1.4 MPa or more. Therefore, in the series of steps of FIG. 6, the safety valve 41b3 of the lithium-ion secondary battery 10 (see FIG. 1) is not opened.

In the preferred embodiment described above, in the hole forming step S3, of the lower portion of the case 41, the hole forming portion 42a is set as a portion in which a hole is formed. The hole forming portion 42a is located under the gap GP1. The gap GP1 is a relatively wide portion of the gap between the case 41 and the electrode body 20. The excessive electrolytic solution 15a is accumulated in the gap GP1. Therefore, by causing the projecting pin 161 to pass through the hole forming portion 42a, the excessive electrolytic solution 15a can be caused to efficiently flow out from the through hole h and thus can be recovered.

In the preferred embodiment described above, the chamber 110 includes the projecting pin 161. In the hole forming step S3, the bottom surface portion 42 of the case 41 is pressed to the projecting pin 161, and thus, the through hole h is formed, so that the electrolytic solution 15 can be recovered. Therefore, the electrolytic solution 15 can be recovered only by an operation of pressing the projecting pin 161. Thus, the electrolytic solution 15 can be recovered by a relatively simple configuration.

In the preferred embodiment described above, the chamber 110 includes the projecting pin 161 as a hole forming tool. The through hole h is formed in the hole forming portion 42a of the bottom surface portion 42 by the projecting pin 161. Thus, for example, as compared to a case where a hole is formed in the case 41 by a laser cutter or the like, the through hole h can be formed in the case 41 by a relatively simple configuration.

In the preferred embodiment described above, the case 41 incudes the pair of broad width surface portions 43 and 44 and the pair of narrow width surface portions 45 and 46. The gap GP1 is formed between the case 41 and each of the pair of narrow width surface portions 45 and 46. The case 41 and each of the pair of the broad width surface portions 43 and 44 abut on each other. In the hole forming step S3, the through hole h is formed in the hole forming portion 42a located under the gap GP1. Thus, as in this preferred embodiment, even when the rectangular lithium-ion secondary battery 10 is used as an electricity, the electrolytic solution 15 can be recovered.

In the preferred embodiment described above, in the installing step S2, the lithium-ion secondary battery 10 is installed such that the pair of broad width surface portions 43 and 44 and the pair of narrow width surface portions 45 and 46 are approximately perpendicular to the installation surface. The through hole h is formed in each of the hole forming portions 42a under gasps GP1 formed at the both ends of the electrode body 20. Herein, depending on dimensions of the electrode body 20 and the case 41, the excessive electrolytic solution 15a in one of the gaps GP1 in the electrode body 20 in the long side direction X is difficult to move in some cases. According to this preferred embodiment, when the pair of broad width surface portions 43 and 44 contact the case 41 or the like case, movement of the excessive electrolytic solution 15a can be restricted. However, as in this preferred embodiment, when the lithium-ion secondary battery 10 is installed such that the pair of broad width surface portions 43 and 44 and the pair of narrow width surface portions 45 and 46 are approximately perpendicular to the installation surface and the through hole h is formed in the hole forming portion 42a, the excessive electrolytic solution 15a can be caused to flow out without moving the excessive electrolytic solution 15a in the long side direction X. Therefore, since the pair of broad width surface portions 43 and 44 and the pair of narrow width surface portions 45 and 46 are approximately perpendicular to the installation surface, the excessive electrolytic solution 15a can be more efficiently recovered.

In the preferred embodiment described above, the case 41 includes the opening 41a1, the sealing plate 41b, the positive electrode terminal 50, and the negative electrode terminal 60. In the installing step S2, the lithium-ion secondary battery 10 is arranged in the chamber 110 such that the sealing plate 41b is arranged on the upper surface. At this time, the positive electrode terminal 50 and the negative electrode terminal 60 are arranged on the upper surface of the lithium-ion secondary battery 10. For example, in a case where the positive electrode terminal 50 and the negative electrode terminal 60 are arranged near a lower end of the lithium-ion secondary battery 10, there is a possibility that flowing out of the electrolytic solution 15 is suppressed by the positive electrode terminal 50 and the negative electrode terminal 60. Therefore, the positive electrode terminal 50 and the negative electrode terminal 60 are arranged on the upper surface, and thus, the electrolytic solution 15 can easily flow out of the lithium-ion secondary battery 10.

In the preferred embodiment described above, as the hole forming tool, the projecting pin 161 is provided, but the hole forming tool is not limited thereto. The hole forming tool may be, for example, a cutting tool that cuts the lower portion of the case 41. The cutting tool can be realized, for example, by an endmill. For example, the lower portion (the hole forming portion 42a) of the case 41 can be cut by three-dimensionally changing a positional relationship between a cutting device and the lithium-ion secondary battery 10 by a driving device that moves a position of the cutting tool. Even in the above-described case, similar to the preferred embodiment described above, the electrolytic solution 15 can be recovered by a relatively simple configuration.

The preferred embodiment described above is merely an example of the electrolytic solution recovery method disclosed herein. The technology disclosed herein can be implemented in various other preferred embodiments. Another preferred embodiments of the technology disclosed herein will be described below.

### <Second Preferred Embodiment>

In the first preferred embodiment described above, the rectangular lithium-ion secondary battery 10 is used as the electricity storage device, but the electricity storage device is not limited thereto. The electricity storage device may be, for example, a cylindrical lithium-ion secondary battery.

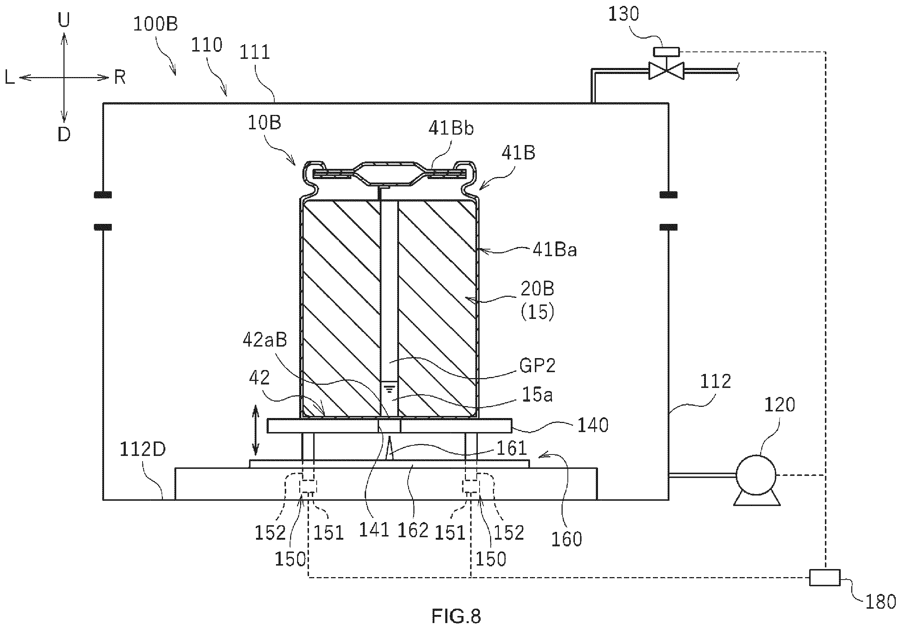

FIG. 8 is a view illustrating an electrolytic solution recovery device 100B according to a second preferred embodiment. In the electrolytic solution recovery device 100B illustrated in FIG. 8, a cylindrical lithium-ion secondary battery 10B is arranged in the chamber 110. Note that, in the second preferred embodiment, each member or portion that has the same function as that of a corresponding member or portion of the first preferred embodiment is denoted by the same reference symbol as that of the first preferred embodiment and redundant description will be omitted or simplified, as appropriate.

The lithium-ion secondary battery 10B includes a case 41B and an electrode body 20B. The case 41B has an approximately cylindrical shape. The case 41B includes a case body 41Ba having a bottomed cylindrical shape and a lid body 41Bb. Each of the case body 41Ba and the lid body 41Bb is formed of metal, and the case body 41Ba and the lid body 41Bb are insulated from each other. An axis direction of the case 41B is approximately perpendicular to a left-right direction of the electrolytic solution recovery device 100B. The electrode body 20B is a cylindrical wound body of the positive electrode sheet 21 (see FIG. 3), the negative electrode sheet 22 (see FIG. 3), and the separator sheets 31 and 32 (see FIG. 3). The electrode body 20B contacts the case 41B in a radial direction. Each of the positive electrode current collector 21a and the negative electrode current collector 22a of the electrode body 20B is electrically connected to the lid body 41Bb and the case body 41Ba.

A gap GP2 is formed at center of the electrode body 20B wound in a cylindrical shape in the radial direction. The gap GP2 is formed between the electrode body 20B and the case 41B in the radial direction of the case 41B. Therefore, the excessive electrolytic solution 15a is accumulated in the gap GP2 in the case body 41Ba. Herein, a portion of the case body 41Ba that is located under the excessive electrolytic solution 15a is a hole forming portion 42aB. The projecting pin 161 is arranged immediately under the hole forming portion 42aB. Note that, in the table 140 of this preferred embodiment, a hole 141 is formed in a position that does not overlap with the projecting pin 161 in a plan view.

Similar to the first preferred embodiment, in the installing step S2 (see FIG. 6), the lithium-ion secondary battery 10B is installed on the table 140. In the installing step S2, as illustrated in FIG. 8, the lithium-ion secondary battery 10B is installed such that the axis direction of the case 41B is approximately perpendicular to an installation surface.

Similar to the first preferred embodiment, in the hole forming step S3 (see FIG. 6), the table 140 is lowered, and thus, a hole can be formed in the hole forming portion 42aB. When the hole is formed in the hole forming portion 42aB, the excessive electrolytic solution 15a and the electrolytic solution 15 permeated in the electrode body 20B flow out to outside of the case 41B.

As described above, according to the electrolytic solution recovery method of this preferred embodiment, even in the cylindrical lithium-ion secondary battery 10B (electricity storage device), similar to the first preferred embodiment, the electrolytic solution 15 can be more efficiently recovered.

According to the electrolytic solution recovery method of this preferred embodiment, the axis direction of the case body 41Ba is approximately perpendicular to the installation surface of the electrolytic solution recovery device 100B. Therefore, for example, as compared to a case where the case body 41Ba is obliquely inclined, the electrolytic solution 15 easily flows out from the hole forming portion 42aB.

The invention disclosed herein has been described above in various forms. However, the preferred embodiments described above or the like shall not limit the present invention, unless specifically stated otherwise. Various changes can be made to the preferred embodiments of the invention disclosed herein, and each of components and processes described herein can be omitted as appropriate or can be combined with another one or other ones of the components and the processes as appropriate, unless a particular problem occurs.

As described above, the present specification includes disclosure set force in the following items.

First Item: An electrolytic solution recovery method for an electricity storage device, the electrolytic solution recovery method including a step of preparing an electricity storage device in which an electrode body and an electrolytic solution are housed in a case, an installing step of installing the electricity storage device in a hermetically sealed chamber, and a step of reducing a pressure in the chamber and forming a hole in a lower portion of the case installed in the chamber in the installing step in an atmosphere with the reduced pressure.

Second Item: The electrolytic solution recovery method for an electricity storage device according to the first item, in which in the step of forming a hole, a portion in which a hole is formed is set in a portion of the lower portion of the case in which a gap between the case and the electrode body is wide.

Third Item: The electrolytic solution recovery method for an electricity storage device according to the first or second item, in which the chamber includes a hole forming tool, and in the step of forming a hole, the hole forming tool is pressed to the lower portion of the case.

Fourth Item: The electrolytic solution recovery method for an electricity storage device according to the third item, in which the hole forming tool is a projecting pin that can pierce into the case.

Fifth Item: The electrolytic solution recovery method for an electricity storage device according to the first or second item, in which the chamber includes a cutting tool that can cut the case, and in the step of forming a hole, a preset position in the lower portion of the case is cut by the cutting tool.

Sixth Item: The electrolytic solution recovery method for an electricity storage device according to any one of the first to fifth items, in which the case includes a pair of broad width side surfaces and a pair of narrow width side surfaces, the case includes a gap between the electrode body and each of the pair of narrow width side surfaces, each of the pair of broad width side surfaces abuts on the electrode body, and in the step of forming a hole, a hole is formed in a position under each of the gap each of which is formed between the electrode body and a corresponding one of the pair of narrow width side surfaces in the case.

Seventh Item: The electrolytic solution recovery method for an electricity storage device according to the sixth item, in which in the installing step, the electricity storage device is installed such that the pair of broad width side surfaces and the pair of narrow width side surfaces are approximately perpendicular to an installation surface.

Eighth Item: The electrolytic solution recovery method for an electricity storage device according to the sixth or seventh item, in which the case includes an opening, a lid body that closes the opening, and a terminal member attached to the lid body and the electrode body, and in the installing step, the case is arranged in the chamber such that the lid body is arranged on an upper surface.

Ninth Item: The electrolytic solution recovery method for an electricity storage device according to any one of the first to fifth items, in which the case has an approximately cylindrical shape, and the gap is formed between the electrode body and the case in a radial direction of the case.

Tenth Item: The electrolytic solution recovery method for an electricity storage device according to the ninth item, in which in the installing step, the electricity storage device is installed such that an axis direction of the case is approximately perpendicular to an installation surface.

## Claims

1. An electrolytic solution recovery method for an electricity storage device, the electrolytic solution recovery method comprising:
a step of preparing (S1) an electricity storage device (10) in which an electrode body (20) and an electrolytic solution (15) are housed in a case (41);
an installing step (S2) of installing the electricity storage device (10) in a hermetically sealed chamber (110); and
a step of reducing a pressure in the chamber (110) and forming a hole (S3) in a lower portion of the case (41) installed in the chamber (110) in the installing step (S2) in an atmosphere with the reduced pressure.

2. The electrolytic solution recovery method for an electricity storage device according to claim 1, wherein
in the step of forming a hole (S3), a portion in which a hole is formed is set in a portion of the lower portion of the case (41) in which a gap between the case (41) and the electrode body (20) is wide.

3. The electrolytic solution recovery method for an electricity storage device according to claim 1 or 2, wherein
the chamber (110) includes a hole forming tool (161), and
in the step of forming a hole (S3), the hole forming tool (161) is pressed to the lower portion of the case (41).

4. The electrolytic solution recovery method for an electricity storage device according to claim 3, wherein
the hole forming tool (161) is a projecting pin (161) that can pierce into the case.

5. The electrolytic solution recovery method for an electricity storage device according to claim 1 or 2, wherein
the chamber (110) includes a cutting tool that can cut the case (41), and
in the step of forming a hole (S3), a preset position in the lower portion of the case (41) is cut by the cutting tool.

6. The electrolytic solution recovery method for an electricity storage device according to claims 1 to 5, wherein
the case (41) includes a pair of broad width side surfaces (43,44) and a pair of narrow width side surfaces (45,46),
the case (41) includes a gap (GP1) between the electrode body (20) and each of the pair of narrow width side surfaces (45,46),
each of the pair of broad width side surfaces (43,44) abuts on the electrode body (20), and
in the step of forming a hole (S3), a hole is formed in a position under each of the gaps (GP1) each of which is formed between the electrode body (20) and a corresponding one of the pair of narrow width side surfaces (45,46) in the case (41).

7. The electrolytic solution recovery method for an electricity storage device according to claim 6, wherein
in the installing step (S2), the electricity storage device (10) is installed such that the pair of broad width side surfaces (43,44) and the pair of narrow width side surfaces (45,46) are approximately perpendicular to an installation surface.

8. The electrolytic solution recovery method for an electricity storage device according to claim 6 or 7, wherein
the case (41) includes
an opening (41a1),
a lid body (41b) that closes the opening (41a1), and
a terminal member (50,60) attached to the lid body (41b) and the electrode body (20), and
in the installing step (S2), the case (41) is arranged in the chamber (110) such that the lid body (41b) is arranged on an upper surface.

9. The electrolytic solution recovery method for an electricity storage device according to claims 1 to 5, wherein
the case (41) has an approximately cylindrical shape, and
the gap (GP2) is formed between the electrode body (20B) and the case (41) in a radial direction of the case (41).

10. The electrolytic solution recovery method for an electricity storage device according to claim 9, wherein
in the installing step (S2), the electricity storage device (10B) is installed such that an axis direction of the case (41) is approximately perpendicular to an installation surface.
